# EUROPEAN PATENT APPLICATION

(11) **EP 1 642 622 A1**
(43) Date of publication of application: **05.04.2006**
(21) Application number: 05380211.2
(22) Date of filing: 30.09.2005
(51) Int. Cl.: A63B 57/00

(54) **Golf tee with visible element**

(30) Priority: 30.09.2004 ES 200402230 U
(71) Applicant: DE LOS REYES MAGDALENO, Josefa, 28042 Madrid (ES)
(72) Inventor: DE LOS REYES MAGDALENO, Josefa, 28042 Madrid (ES)

(57) **Abstract**

A golf support ball, of the kind known as "Tee", is described. It has visualization elements which allows them to be located fast when they are propelled and through by the action of a knock during the play. The invention's support has a notch in the neck's part between the pointed body and the ball support head. Such notch is configured as a groove, rounded or sloped, designed and measured to allow the coupling and displacement of a visualization element. It is materialized as a tape, cord or similar through a knot or other elastic element associated to one end of the visualization element, with the particularity that this one has been made with a reflecting material.

## Description

### Object of the Invention

This invention refers to a support for the golf ball with a visualization element that adds essential features of innovation and remarkable advantages with respect to means known and used for the same purposes in the current state of the art.

Particularly, the invention proposes the design and development of a support device similar to those known as "tees", provided with means allowing an easy and fast localization thereof when they are impelled by the drive received while playing golf, and avoiding thus the undesirable loss of such supports. The invention predicts that such localization means may be implemented from longitudinal elements, like tapes or similar, designed to adapt themselves easily, comfortably and quickly to the body of the tee. On its side, the invention equally foresees the incorporation of modifications on the body of a conventional tee to receive and hold the said localization means.

The application field of this invention is the industrial branch devoted to production of golf items, accessories and complements.

### Background and Summary of the Invention

It is well-known the fact that while playing golf, the golf player uses a support on which he/she places the ball that must be hit with the corresponding golf club. These supports, normally known as "tees", are usually comprised by a small peg made of wood or plastic, duly prepared to hold the golf ball off the ground so it can be driven with the golf club.

The aspect and manufacturing details of conventional starting supports are well known in the state of the art. Therefore, conventional supports are comprised by a head, usually concave on its upper side, i.e. the side on which the golf ball is placed, and a rod or body, generally with a long shape, with a predetermined length that usually has a pointed end so it can be put into the ground easily when it has to be used.

There are multiple support types in the market, designed to offer the user several options regarding characteristics and details that distinguish them from others. In that sense, numerous improvements and variations have been introduced, always tending to optimize the presentation of the ball to the player, with the purpose of obtaining a better performance in the drive. In this sense, it can be mentioned the existence in the current state of the art of the document of Utility Model No. U-278284. It describes the manufacture of a support for golf balls (or "tee") of the type mentioned above, and it provides all the features that distinguish an object of this type, including the formation of a concave surface destined to receive and hold the ball that must be hit.

All these kinds of supports we have mentioned above present a common disadvantage. Many times, when the golf ball is hit, both the ball and the support receive an impact and the latter is thrown far away. It gets lost frequently since it ends hidden in the grass of the course, and this makes us lose our time searching them, which is usually a useless task because we never recuperate them.

Nevertheless, in spite of these disadvantages, we do not know anything about the existence of some kind of golf ball support with localization means in the market that might prevent their loss when they are thrown together with the ball due to the hit both receive.

The main object of this invention is providing a golf ball support which, with the characteristics of conventional supports, adds the advantage of allowing an easy, comfortable and fast localization to avoid unnecessary losses. This objective has been fully accomplished by means of the support that is going to be described below, and whose main characteristics are gathered in the characterizing part of the following claim 1.

Basically, the support proposed by the invention is obtained from a conventional support. The required modifications are carried out on its body to allow the comfortable and fast incorporation of the necessary means for its localization. Such localization means are, preferably: an element configured as a tape, made of retro-reflective material or with features allowing an easy visualization, provided with retention means that can be attached to a notch or similar on the support body.

### Brief Description of the Drawings

These and other characteristics and advantages of the invention shall be clearer with the detailed description below of the ideal production. It is given only as an illustrative but not limited example, with reference to the drawings attached, in which:
Drawing 1 shows a schematic view of an example of a golf ball conventional support (or "tee"), modified to incorporate the visualization elements proposed by the invention. They can be seen better in the larger detail included also in this Drawing;
Drawing 2 shows a schematic view of an enlarged detail of a golf ball support, or "tee", like the one in Drawing 1, but implemented as an alternative version of the last one, and
Drawing 3 represents a schematic view of an enlarged detail of a golf ball support or "tee" like the previous ones, but implemented as an alternative version of the last ones.

### Description of the Ideal Production

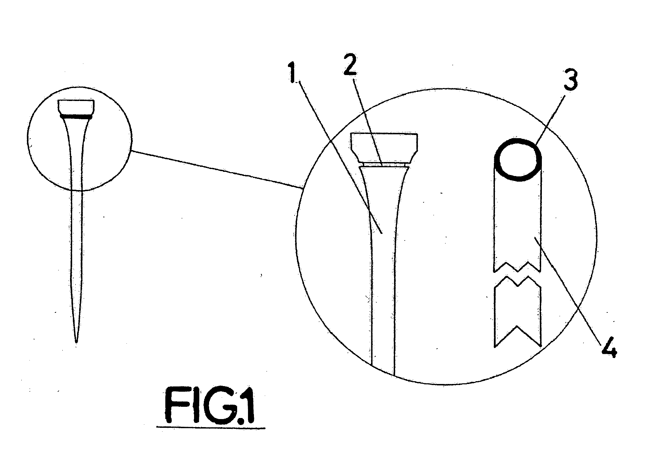

As we said above, the detailed description of the invention shall be carried out taking into account the representation of the attached drawings. By means of these drawings the same numeric references are used to designate the same or similar parts. In this sense, observing Drawing 1 in the first place, there is a schematic representation of a support manufactured in compliance with the invention. It includes the required modifications to incorporate the visualization and localization means. The support of the invention comprises, as usual, a body 1 generally a bit longer, with a pointed end so it can be easily put into the ground, and thicker on the other end to form the tee head. As it can be seen, according to the invention, in the part between body and head, i.e., in the tee neck, at a predetermined distance from the upper surface, there is a round groove or notch (2). It surrounds completely such neck as a crown. This notch or groove 2 has been measured as far as depth, width and distance from the upper side of the tee 1 to allow the coupling of an elastic ring 3, preferably made of rubber, associated to the visualization element and measured so that it can fit, with some pressure, in the notch 2 of the tee; the visualization element has been referred as 4, and it is made of a retro-reflecting tape, obtained from materials such as a string, a plastic or metallic chain or any other material: metallic, textile or derived from plastic, resins, PVC, etc... that can also be used with advertising purposes.

As you can understand when the visualization element 4 is attached to the support body introducing the elastic ring 3 in the space provided by the notch 2, such element remains set to the tee body, facilitating the localization process of the latter when it falls on the grass due to the drive.

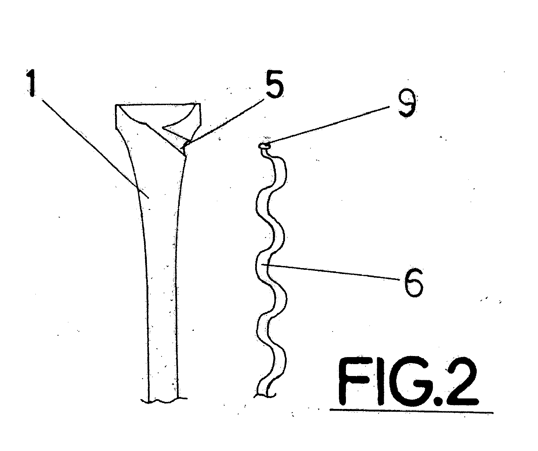

Drawing 2 shows a representation of a support regarded as an alternative version of Drawing 1, and designed as well to incorporate the visualization means. In this case, the body 1, which also corresponds to a support of conventional features, presents a drilling 5 performed by emptying from the side edge the upper surface, shaping a slot with a slight inclination as it goes down; such slot 5 has been projected and measured so that it can contain a narrow tape or cord 6, with a predetermined length, which can be simple or double as appropriate to allow a knot 9 corresponding to one of its ends. With such knot the cord 6 shall be safely fixed to body 1 of the support, introducing such knot 9 into the said slot 5. The narrow tape or cord 6 can be made of cord, elastic rubber, or plastic or metallic chain, etc.

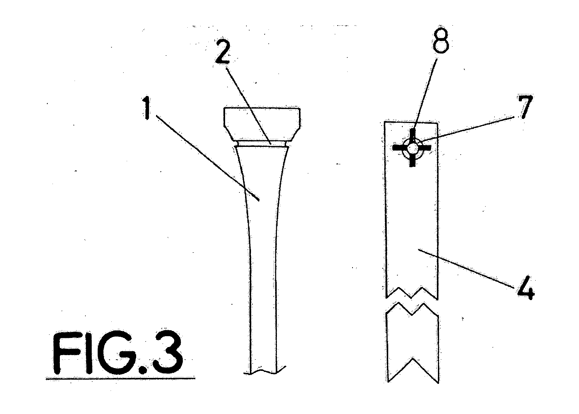

Lastly, with respect to Drawing 3, you can see the schematic representation of a conventional tee 1 that has been modified to include, with great advantages, the best proposals of the invention, and whose general configuration corresponds to the one shown in the previous versions. In this version, the body 1 of the support presents a notch 2 whose shape and measure features are equivalent to the ones described in the notch corresponding to Drawing 1. However, in this case the visualization object has been manufactured with an elastic round part 7, for example made of rubber or similar, destined to fit into the notch 2 of the tee 1, and which is linked to a retro-reflecting tape 4; in the tape 4 some cross cuts 8 have been made, and their position coincides with the elastic part 7 above, so it allows elasticity when tape 4 is coupled to the body 1 of the support until it is contained into the said round notch 2, where the elastic recovery of the part 7 keeps the tape fixed to the body 1 to ease the search and recovery of the set.

As you shall understand, the different versions of the golf ball support according to the invention have been obtained from conventional support devices, modified conveniently and without redesigning the latter, which evidently provides the invention with some additional features as far as applicative versatility is concerned. Furthermore, the addition of the visualization element to the body of the support increases the weight of the set, reducing thus the distance as consequence of the impact received with the "drive" of the player, reducing the search area, and allowing an easy localization due to the incorporated visualization element.

It is not necessary to extend the content of this description so that experts may understand the range and the advantages of the invention, as well as developing and practising with it.

Nevertheless, you must understand that the invention has been described according to the ideal production thereof, so it can be modified and this does not necessarily mean that there might be any alteration in the functioning of such invention, affecting such modifications, specially, to the shape, size and/or manufacturing materials.

## Claims

1. Support for the golf ball with visualization element. The same type as the ones used to hold the golf ball off the ground when it is going to be hit with the golf club by the player while he/she is practising the sport. It has a slightly long shape with a sharp end to put it into the ground easily, and the other end is thicker to form the tee head and the support of the ball. It includes a notch (2, 5) in the part between the body and the head of the support (1), measured and configured to admit the fixing of a visualization element (4, 6) as a tape, a simple or double narrow tape, cord or similar, with a predetermined length, and there are linking means (3, 7, 9) in the said notch (2, 5) of the tee body (1).

2. Support in compliance with claim 1, the notch (2) mentioned above adopts the shape of a round groove or crown stretched around the perimeter to the body of the support.

3. Support in compliance with claim 1, the notch (5) mentioned above is comprised by a bent groove ending in the side area of the supporting upper surface and support of the ball.

4. Support in compliance with claims 1 and 2, the linking means (3) coupled to the visualization element (4) consists of an elastic rubber ring or a similar material, measured in accordance with the notch (2) mentioned above.

5. Support in compliance with claims 1 and 3, the linking means (9) associated to the visualization element (6), when the latter is made of a narrow tape, simple or double, a cord or something similar, is a knot at the end, measured appropriately to allow its accommodation and movement in the notch (5) in the shape of a bent groove.

6. Support in compliance with claims 1 and 2, the linking means (7) of the visualization element (4), as a tape, to the notch (2) performed on the tee body (1), is an elastic round piece (7) made of rubber or similar, in association with the cross cuts (8) performed on the tape itself (4).

7. Support in compliance with claims 1 to 6, **characterized by** the fact that the visualization element (4, 6) is made of retro-reflecting material.
